(19) Europäisches Patentamt
European Patent Office
Office européen des brevets

(11) EP 0 825 032 A1

(12) EUROPÄISCHE PATENTANMELDUNG

(43) Veröffentlichungstag:
25.02.1998 Patentblatt 1998/09

(51) Int. Cl.⁶: **B41M 7/00**

(21) Anmeldenummer: 97112717.0

(22) Anmeldetag: 24.07.1997

(84) Benannte Vertragsstaaten:
AT BE CH DE DK ES FI FR GB GR IE IT LI LU MC NL PT SE

(30) Priorität: 16.08.1996 DE 19632961

(71) Anmelder:
BASF Lacke und Farben AG
48165 Münster (DE)

(72) Erfinder:
• Enthoven, Nicolaas Leonardus Maria, Dr.
4003 KW Tiel (NL)
• Sander, Petrus Wilhelmus
4201 ZP Gorinchem (NL)

(74) Vertreter: Hüsener, Susanne, Dr.
BASF Lacke + Farben AG,
Patente/Lizenzen/Dokumentation,
Postfach 61 23
48136 Münster (DE)

(54) **Verfahren zur Beschichtung von Kunststoffteilen sowie die so erhältlichen Kunststoffteile**

(57) Die vorliegende Erfindung betrifft ein Verfahren zur Beschichtung von Kunststoffteilen, die

1. auf mindestens einer Oberfläche zumindest teilweise mit einer oder mehreren Druckfarben beschichtet sind und die

2. in Kontakt mit Lebensmitteln stehend verpackt werden,
dadurch gekennzeichnet, daß auf die Druckfarbe ein Lack auf Basis einer wäßrigen Acrylatcopolymerisat-Dispersion bzw. -Lösung appliziert und anschließend getrocknet wird, wobei die wäßrige Acrylat-Dispersion bzw. Lösung herstellbar ist durch Emulsionspolymerisation von

1 bis 15 Gew.-% $\alpha,\beta$-ethylenisch ungesättigten Carbonsäuren,

40 bis 69 Gew.-% Alkylestern der Acrylsäure mit 1 - 12 Kohlenstoffatomen im Alkylrest,

30 bis 55 Gew.-%, bevorzugt 35 bis 45 Gew.-%, Alkylestern der Methacrylsäure mit 1 - 12 Kohlenstoffatomen im Alkylrest und/oder Vinylaromaten und

ggf. bis zu 25 Gew.-% weiterer Monomerer,

wobei die Summe der Monomeren jeweils 100 Gew.-% beträgt und die Glasübergangstemperatur mindestens 25 °C beträgt.

EP 0 825 032 A1

## Beschreibung

Die vorliegende Erfindung betrifft ein Verfahren zur Beschichtung von Kunststoffteilen, die

1. auf mindestens einer Oberfläche zumindest teilweise mit einer oder mehreren Druckfarben beschichtet sind und die

2. in Kontakt mit Lebensmitteln stehend verpackt werden.

Gegenstand der vorliegenden Erfindung sind ferner die nach diesem Verfahren erhältlichen Kunststoffteile.

Es ist bekannt, zu Werbezwecken Lebensmitteln Kunststoffteile zuzugeben, die mit den unterschiedlichsten Motiven bedruckt sein können. So kann den Lebensmitteln beispielsweise pro Packung jeweils ein im wesentlichen ebenes (z.B. scheibenförmiges oder eckiges) Kunststoffteil zugefügt werden, das mit den verschiedensten Motiven bedruckt sein kann, wie z.B. jeweils einem Fußballspieler einer bestimmten (National)Mannschaft bzw. anderen Sportlern oder Künstlern, aber auch mit verschiedenen Landschaften, Tieren, Comic-Figuren, Autos, Flugzeugen, Schiffen, Gebäuden o.ä. Durch die Sammelmöglichkeit der einzelnen Motive soll zum Kauf der jeweiligen Produkte angeregt werden.

Diese Kunststoffteile sind unter den verschiedensten Bezeichnungen bekannt, beispielsweise als Flippos, als Jetons, Buttons, Sticker u.ä. Selbstverständlich können die zugesetzten Kunststoffteile auch andere Geometrien aufweisen. So kommen daher auch beispielsweise Figuren und andere Spielzeugartikel in Betracht.

Diese Kunststoffteile können den unterschiedlichsten Lebensmitteln zugefügt werden, beispielsweise Kartoffelchips, Erdnußflipsen, Salzgebäck bzw. anderen salzigen Snacks u.ä., Müslis bzw. Cerealien, Schokoladenerzeugnissen, Plätzchen usw. Gemeinsam ist diesen Kunststoffteilen jedoch stets, daß sie in Kontakt mit den jeweiligen Lebensmitteln stehen und daher den entsprechenden lebensmittelrechtlichen Verordnungen zu entsprechen haben. Dies kann aber bezüglich der verwendeten Druckfarbe zu Problemen führen.

Bei den Kunststoffteilen kann zur Vermeidung dieser Probleme auf die Druckfarbe noch ein Lack aufgebracht werden. Dieser Lack sollte für den Kontakt mit Lebensmitteln geeignet sein, also beispielsweise die entsprechenden lebensmittelrechtlichen Anforderungen erfüllen sowie zu Beschichtungen führen, die physiologisch unbedenklich sowie geruchs- und geschmacksneutral sind. Darüber hinaus sollte der Lack eine gute Haftung zu den üblicherweise eingesetzten Druckfarben sowie eine gute Haftung zu den Kunststoffen aufweisen. Schließlich sollte der Lack möglichst keine organischen Lösemittel enthalten.

Der vorliegenden Erfindung liegt somit die Aufgabe zugrunde, ein Verfahren zur Beschichtung dieser Kunststoffteile zur Verfügung zu stellen, das die Nachteile des Standes der Technik vermeidet. Insbesondere sollte der zur Beschichtung der Kunststoffteile eingesetzte Lack für den Kontakt mit Lebensmitteln geeignet sein, also beispielsweise die entsprechenden lebensmittelrechtlichen Anforderungen erfüllen, sowie zu Beschichtungen führen, die physiologisch unbedenklich sowie geruchs- und geschmacksneutral sind. Darüber hinaus sollte der Lack eine gute Haftung zu den üblicherweise eingesetzten Druckfarben sowie eine gute Haftung zu den Kunststoffen aufweisen. Ferner sollte gewährleistet sein, daß die erhaltenen Beschichtungen gute optische Eigenschaften und eine gute Kratzfestigkeit aufweisen. Schließlich sollte der erfindungsgemäß eingesetzte Lack möglichst keine organischen Lösemittel enthalten.

Die der vorliegenden Erfindung zugrundeliegende Aufgabe wird überraschenderweise durch ein Verfahren der eingangs genannten Art gelöst. Das Verfahren ist dadurch gekennzeichnet, daß auf die Druckfarbe ein Lack auf Basis einer wäßrigen Acrylatcopolymerisat-Dispersion bzw. -Lösung appliziert und getrocknet wird, wobei die wäßrige Acrylat-Dispersion bzw. Lösung herstellbar ist durch eine Emulsionspolymerisation von

a) 1 bis 15 Gew.-%, bevorzugt 2 bis 8 Gew,-%, $\alpha,\beta$-ethylenisch ungesättigten Carbonsäuren,

b) 40 bis 69 Gew.-%, bevorzugt 48 bis 60 Gew.-%, Alkylestern der Acrylsäure mit 1 - 12 Kohlenstoffatomen im Alkylrest,

c) 0 bis 55 Gew.-%, bevorzugt 35 bis 45 Gew.-%, Alkylestern der Methacrylsäure mit 1 - 12 Kohlenstoffatomen im Alkylrest und/oder Vinylaromaten und

d) ggf. bis zu 25 Gew.-%, bevorzugt bis zu 10 Gew.-%, weiterer Monomerer,

wobei die Summe von a), b), c) und d) jeweils 100 Gew.-% beträgt, die Glasübergangstemperatur ($T_g$) des Acrylatcopolymerisats mindestens 25 °C beträgt und bevorzugt im Bereich von 25 °C bis 50 °C, besonders bevorzugt von 30 °C bis 50 °C, liegt.

Die nach dem erfindungsgemäßen Verfahren hergestellten Kunststoffteile können Lebensmitteln beispielsweise zu Werbezwecken zugesetzt werden. Das erfindungsgemäße Verfahren weist dabei den Vorteil auf, daß zur Herstellung der Kunststoffteile üblicherweise eingesetzte Druckfarben verwendet werden können. Die eingesetzten Druckfarben müssen insbesondere nicht die entsprechenden lebensmittelrechtlichen Anforderungen erfüllen, da sie mit dem erfindungsgemäß eingesetzten Lack überlackiert werden. Vorteilhaft ist ferner, daß die erfindungsgemäß eingesetzten Lacke zu Beschichtungen mit einer guten Haftung auf den verwendeten Druckfarben und den Kunststoffen, einer guten Kratzfestigkeit und guten optischen Eigenschaften führen. Schließlich ist es von Vorteil, daß die erfindungsgemäß eingesetzten Lacke keine organischen Lösemittel aufweisen.

Die in den erfindungsgemäß eingesetzten Lacken verwendete Acrylat-Dispersion bzw. -Lösung ist bereits aus der DE-A-43 41 815 bekannt. Gemäß dieser Schrift wird die Acrylat-Dispersion bzw. -Lösung zur Herstellung von Siegellacken für die Herstellung von gesiegelten Verpackungsbehältern eingesetzt. Diese dort beschriebenen Siegellacke haben die Aufgabe, klebende Beschichtungen zu erzeugen, die einen wirksamen Siegelverschluß der Verpackungsbehälter bei möglichst niedrigen Siegeltemperaturen ermöglichen, die aber gleichzeitig auch gute Antiblock-Eigenschaften besitzen, d.h. eine Anhaftung übereinanderliegender Folienschichten bei Lagerung der mit den Siegellacken beschichteten Kunststoffolien in Form von Rollen verhindern. Siegellacke unterscheiden sich somit bezüglich ihrer Eigenschaften signifikant von den erfindungsgemäß eingesetzten Lacken für die Beschichtung von bedruckten, in Kontakt mit Lebensmitteln stehenden Kunststoffteilen.

Wie bereits ausgeführt, wird nämlich von den erfindungsgemäß eingesetzten wäßrigen Lacken neben der Erfüllung der lebensmittelrechtlichen Anforderungen gerade erwartet, daß er nicht mit sich selbst und nicht mit anderen Oberflächen (nicht mit dem Füllgut, dem Verpackungsmaterial etc.) verklebt, eine gute Haftung zu den Druckfarben und den Kunststoffen sowie gute optische Eigenschaften (einschl. Transparenz) und eine gute Kratzfestigkeit der resultierenden Beschichtungen aufweist.

Der erfindungsgemäß verwendete Lack basiert auf einer wäßrigen Acrylcopolymerisat-Dispersion bzw. -Lösung, die herstellbar ist durch eine Emulsionspolymerisation von

a) 1 bis 15 Gew.-%, bevorzugt 2 bis 8 Gew.-%, $\alpha,\beta$-ethylenisch ungesättigten Carbonsäuren,

b) 40 bis 69 Gew.-%, bevorzugt 48 - 60 Gew.-%, Alkylestern der Acrylsäure mit 1 - 12 Kohlenstoffatomen im Alkylrest,

c) 30 bis 55 Gew.-%, bevorzugt 35 bis 45 Gew.-%, Alkylestern der Methacrylsäure mit 1 - 12 Kohlenstoffatomen im Alkylrest und/oder Vinylaromaten und

d) ggf. bis zu 25 Gew.-%, bevorzugt bis zu 10 Gew.-%, weiterer Monomerer,

wobei die Summe von a), b), c) und d) jeweils 100 Gew.-% beträgt.

Beispiele für $\alpha,\beta$-ethylenisch ungesättigte Carbonsäuren sind Acrylsäure, Methacrylsäure, Maleinsäure, Crotonsäure sowie deren Mischungen. Bevorzugt werden die $\alpha,\beta$-monoethylenisch ungesättigte Monocarbonsäuren verwendet. Besonders bevorzugt wird Acrylsäure eingesetzt.

Beispiele für geeignete Alkylester der Acrylsäure mit 1 - 12 Kohlenstoffatomen im Alkylrest (Komponente b) sind Methylacrylat, Ethylacrylat, Propylacrylat, iso-Propylacrylat, Butylacrylat, iso-Butylacrylat, t-Butylacrylat, n-Pentylacrylat, iso-Pentylacrylat, Hexylacrylat, n-Octylacrylat, 2-Ethylhexylacrylat und Decylacrylat. Bevorzugt wird Methylacrylat eingesetzt.

Beispiele für geeignete Alkylester der Methacrylsäure (Komponente c) sind Methylmethacrylat, Ethylmethacrylat, Propylmethacrylat, iso-Propylmethacrylat, n-Butylmethacrylat, iso-Butylmethacrylat, t-Butylmethacrylat, n-Pentylmethacrylat, iso-Pentylmethacrylat, Hexylmethacrylat, n-Octylmethacrylat, 2-Ethylhexylmethacrylat, Decylmethacrylat und Dodecylmethacrylat.

Beispiele für geeignete Vinylaromaten sind Styrol, $\alpha$-Alkylstyrol und Vinyltoluol, insbesondere Styrol. Bevorzugt werden die Vinylaromaten in einer Menge von 21 bis 42 Gew.-%, bezogen auf das Gesamtgewicht der Monomerenmischung, eingesetzt.

Beispiele für geeignete Monomere d) sind Acrylnitril und Methacrylnitril. Bevorzugt werden die Monomeren d) in einer Menge von bis zu 25 Gew.-%, bevorzugt bis zu 10 Gew.-%, besonders bevorzugt von 3 bis 9 Gew.-%, bezogen auf das Gesamtgewicht der Monomerenmischung, eingesetzt.

Die Acrylatcopolymerisat-Dispersion bzw. -Lösung ist bevorzugt durch eine zweistufige Emulsionspolymerisation herstellbar, wobei in der ersten Stufe der Emulsionspolymerisation 5 bis 20 Gew.-% der Monomerenmischung aus a), b), c) und ggf. d) bei einer Temperatur von 70 °C - 90 °C unter Verwendung von Emulgatoren, Polymerisationsinitiatoren und Kettenübertragungsmitteln polymerisiert werden, bevorzugt nach erneuter Emulgatorenzugabe in der zweiten Stufe der Emulsionspolymerisation die restlichen 80 bis 95 Gew.-% der Monomerenmischung in Gegenwart des in der ersten Stufe der Emulsionspolymerisation erhaltenen Polymerisats bei einer Temperatur von 70 °C - 90 °C polymerisiert werden, das erhaltene Reaktionsgemisch durch Zugabe von Basen zumindest teilweise neutralisiert wird und ggf. Pigmente, ggf. übliche Hilfsstoffe und Additive zugefügt werden.

Die Emulsionspolymerisation zur Herstellung der wäßrigen Acrylatcopolymerisat-Dispersion bzw. -Lösung wird in wäßrigem Medium in bekannten Apparaturen, beispielsweise in einem Rührkessel mit Heiz- und Kühlvorrichtungen, durchgeführt.

Die Zugabe der Monomeren kann in der Weise erfolgen, daß eine Lösung aus dem gesamten Wasser, dem Emulgator und dem Initiator oder einem Teil des Initiators vorgelegt wird und, falls der Initiator teilweise während der Polymerisation zugegeben wird, getrennt davon, aber parallel dazu, der Rest des Initiators bei der Polymerisationstemperatur langsam zugegeben wird. Es ist auch möglich, einen Teil des Wassers und des Emulgators vorzulegen und aus dem Rest des Wassers und des Emulgators und aus dem Monomerengemisch eine Präemulsion herzustellen, die bei der Polymerisationstemperatur langsam zugegeben wird, wobei der Initiator wiederum getrennt vorgelegt oder teilweise getrennt zugegeben wird. Es ist auch möglich, in der ersten Stufe das Monomerengemisch in Form einer Präemulsion zuzugeben und in der zweiten Stufe das Monomerengemisch in Substanz, d.h. ohne Wasser und Emulgator, zuzugeben und den Initiator getrennt, aber parallel dazu zuzugeben. Bevorzugt ist, eine Lösung aus Wasser und Emulgator vorzulegen und das Monomerengemisch und getrennt davon, aber parallel dazu, den Initiator in Wasser bei der Polymerisationstemperatur langsam zuzugeben. Anschließend wird nach erneuter Emulgatorzugabe in der zweiten Polymerisationsstufe der Rest des Monomerengemisches in den Reaktor dosiert. Der Rest des Initiators, der nicht vorgelegt wurde, kann auch komplett nach Zugabe der Monomeren zugegeben werden. Diese Nachdosierung von Initiator ist jedoch weniger vorteilhaft.

Die Polymerisationstemperatur liegt im Bereich von 70 - 90 °C.

Vorteilhafterweise wird das Mengenverhältnis zwischen den Monomeren und dem Wasser so ausgewählt, daß die resultierende Acrylatcopolymerisat-Dispersion einen Feststoffgehalt im Bereich von 20 - 60 %, bevorzugt 20 - 40 %, aufweist.

Als Emulgatoren können anionische und/oder nichtionische Emulgatoren verwendet werden. Beispiele für anionische Emulgatoren sind Alkali- oder Ammoniumsalze von Schwefelsäurehalbestern von Alkylphenolen oder von Alkoholen, ferner die Schwefelsäurehalbester von oxyethylierten Alkylphenolen oder oxyethylierten Alkoholen sowie Phosphorsäureester von oxyalkylierten Alkylphenolen.

Eingesetzt werden beispielsweise Alkalisalze von Schwefelsäurehalbestern von mit 23 Mol Ethylenoxid pro Mol umgesetztem Nonylphenol, Alkyl- oder Arylsulfonat, Natriumlaurylsulfat, Natriumlaurylethoxylatsulfat sowie das Alkalisalz von Diestern der Sulfobernsteinsäure mit Alkoholen mit 6 - 20 Kohlenstoffatomen. Die bevorzugt verwendeten nichtionischen Emulgatoren sind Ether von mit 5 - 23 Mol Ethylenoxid umgesetzten Nonylphenolen.

Bevorzugt werden Phosphorsäureester von oxalkylierten Alkylphenolen, besonders Phosphorsäureester des Umsetzungsproduktes von 1 mol Nonylphenol mit 5 mol Ethylenoxid mit einer Säurezahl von 125 eingesetzt.

Als Initiatoren für die Emulsionspolymerisation eignen sich die üblichen anorganischen Peroxodisulfate, bevorzugt Kaliumperoxodisulfat und Ammoniumperoxodisulfat, sowie Ammonium- oder Alkalimetallperoxydiphosphate. Es können auch Redox-Initiatoren eingesetzt werden, beispielsweise Wasserstoffperoxid, Benzoylperoxid, organische Perester, wie Perisopivalat, in Kombination mit wasserlöslichen Reduktionsmitteln, wie z. B. Ascorbinsäure, Schwefelverbindungen, Triethylamin, Natriumdisulfit, Hydrazin, Hydroxylamin, Glykolsäure und Weinsäure.

Geeignete Kettenübertragungsmittel sind beispielsweise Mercaptane oder Polyhalogenverbindungen oder verzweigte aromatische Kohlenwasserstoffe, wie z. B. Trimethylbenzol. Die Kettenübertragungsmittel werden bevorzugt in allen Stufen der Emulsionspolymerisation eingesetzt.

In der ersten Stufe der bevorzugten zweistufigen Emulsionspolymerisaton werden 5 bis 20 Gew.-% der Monomerenmischung aus a), b), c) und ggf. d) bei einer Temperatur von 70 - 90 °C polymerisiert. Bevorzugt nach erneuter Emulgatorenzugabe werden in der zweiten Stufe der Polymerisation die restlichen 80 bis 95 Gew.-% der Monomerenmischung in Gegenwart des in der ersten Stufe der Emulsionspolymerisation erhaltenen Polymerisats polymerisiert.

Besonders bevorzugt wird die wäßrige Acrylatcopolymerisat-Dispersion hergestellt durch Emulsionspolymerisation von Acrylsäure, Methylacrylat und Methylmethacrylat.

Die Glasübergangstemperatur des Acrylatcopolymerisats beträgt mindestens 25 °C und liegt bevorzugt im Bereich von 25 °C - 50 °C, besonders bevorzugt im Bereich von 30 °C - 50 °C.

Die Glasübergangstemperatur des Acrylatcopolymerisats kann mit Hilfe der DSC (= Differential Scanning Calorimetry) gemessen werden. Die Glasübergangstemperatur kann aber bekanntermaßen auch mit Hilfe der Gleichung

$$1/Tg = \Sigma \, W_n/Tg_n$$

Tg =      Glasübergangstemperatur des Copolymers in °K

$W_n$ =      Gewichtsanteil des n-ten Monomers

Tgn =      Glasübergangstemperatur des Homopolymers aus dem n-ten Monomer

berechnet werden.

Das durchschnittliche zahlenmittlere Molekulargewicht Mn des Acrylatcolymerisats beträgt im Falle der Acrylatcopolymerisat-Lösungen bevorzugt 8.000 - 12.000, gemessen mit Gelpermeationschromatographie gegen Polystyrolstandard und gelöst in Tetrahydrofuran. Im Falle der Acrylatcopolymerisat-Emulsionen sind wesentlich höhere Molekulargewichte Mn der Polymerisate von beispielsweise bis zu 150.000, bevorzugt 50.000 bis 90.000, möglich (gemessen mit Gelpermeationschromatographie gegen Polystyrolstandard).

Das erhaltene Acrylatcopolymerisat wird durch Zugabe von Basen zumindest teilweise neutralisiert, und es werden ggf. übliche Hilfsstoffe und Additive zur Herstellung des wäßrigen Siegellackes zugegeben. Als Base werden Ammoniak und/oder Amine, vorteilhafterweise in Form einer wäßrigen Lösung des Neutralisationsmittels, eingesetzt. Insbesondere wird Ammoniak eingesetzt.

Die Säurezahl des Acrylatcopolymerisats liegt üblicherweise im Bereich von etwa 10 bis 100 mg KOH/g.

Der erfindungsgemäß eingesetzte Lack auf Basis der wäßrigen Acrylatcopolymerisat-Dispersion bzw. -Lösung enthält ggf. Pigmente und/oder Farbstoffe und/oder Füllstoffe sowie ggf. geeignete Hilfsstoffe und Additive, die auf dem Gebiet der Beschichtung von den in Rede stehenden Kunststoffteilen üblich sind. Dazu zählen beispielsweise Verlaufsmittel, Hydrophobierungsmittel, Wachse und Additive, die die Rheologie, das Gleitvermögen und die Entschäumung positiv beeinflussen.

Die Additive werden üblicherweise in einer Menge von 0 bis 5 Gew.-%, bezogen auf das Gesamtgewicht des wäßrigen Lackes, eingesetzt. Die Pigmente und/oder Farbstoffe und/oder Füllstoffe werden üblicherweise in einer Menge von 0 bis 20 Gew.-%, bezogen auf das Gesamtgewicht des wäßrigen Lackes, eingesetzt. Bevorzugt werden transparente Lacke eingesetzt.

Der erfindungsgemäß eingesetzte wäßrige Lack wird auf die Kunststoffteile in üblicher Weise, beispielsweise durch Gravurauftragung, Walzenauftragung, Eintauchen, Sprühen, mit Hilfe des Tief- oder Flexodruckverfahren oder des Umkehrwalzenverfahrens (Reverse-Roll-Auftragsverfahren) aufgebracht. Die überschüssige wäßrige Lösung kann durch Abquetschwalzen oder Abstreichmesser entfernt werden. Die wäßrigen Lacke sollten üblicherweise in einer solchen Menge aufgebracht werden, daß beim Trocknen eine glatte, gleichmäßig verteilte Schicht mit einem Gewicht von 1 bis 10 g/m$^2$ abgelagert wird.

Der durch den wäßrigen Lack gebildete Überzug auf dem Kunststoffteil wird anschließend mit Luft oder mit heißer Luft (Temperatur üblicherweise zwischen 35 und 65 °C), Strahlungswärme oder durch irgendeinanderes übliches Mittel getrocknet. Hierbei sollte bevorzugt eine Erwärmung der beschichteten Kunststoffteile auf Temperaturen oberhalb der Glasübergangstemperatur des in dem wäßrigen Lack eingesetzten Acrylatcopolymerisates (Objekttemperatur unterhalb der Glasübergangstemperatur) vermieden werden. Falls bei erhöhten Temperaturen getrocknet wird, so daß die Objekttemperatur größer gleich der Glasübergangstemperatur des in dem wäßrigen Lack eingesetzten Acrylatcopolymerisates ist, sollte bevorzugt solange ein Kontakt der beschichteten Flächen der Kunststoffteile vermieden werden, bis die Objekttemperatur wieder unter der Glasübergangstemperatur des Acrylatcopolymerisates liegt, um Anhaftungen/Beschädigungen der Beschichtung zu vermeiden.

Die zu beschichtenden Kunststoffteile werden den Lebensmitteln insbesondere zu Werbezwecken zugesetzt. Sie können mit den unterschiedlichsten Motiven bedruckt sein. So kann den Lebensmitteln beispielsweise pro Packung jeweils ein Kunststoffteil zugefügt werden, das mit den verschiedensten Motiven bedruckt sein kann, wie z.B. jeweils einem Fußballspieler einer bestimmten (National)Mannschaft bzw. anderen Sportlern, Musikern oder Künstlern, aber auch mit verschiedenen Landschaften, Tieren, Comic-Figuren, Autos, Flugzeugen, Schiffen, Gebäuden o.ä. Durch die Sammelmöglichkeit der einzelnen Motive soll zum Kauf der jeweiligen Produkte angeregt werden.

Diese Kunststoffteile können die unterschiedlichsten Geometrien aufweisen. So können sie beispielsweise im wesentlichen eben sein, also beispielsweise scheibenförmig, elipsenförmig, ringförmig, dreieckig, rechteckig, quadratisch oder mehreckig sein. Diese Kunststoffteile sind je nach ihrer Form und ihres Verwendungszweckes unter den verschiedensten Bezeichnungen bekannt, beispielsweise als Flippos, als Jetons, Buttons, Sticker u.ä. Diese im wesentlichen ebenen Kunststoffteile weisen typischerweise eine Größe zwischen 1 und 50 cm$^2$ auf. Selbstverständlich können die zugesetzten Kunststoffteile auch andere Geometrien aufweisen. Insbesondere kommen daher auch Figuren und andere kleinere Spielzeugartikel sowie kleine Gebrauchsgegenstände, wie z.B. Flaschenöffner, Schlüsselanhänger u.ä. in Betracht. Diese Kunststoffteile weisen typischerweise eine Größe zwischen 1 und 20 cm auf.

Es werden meist Tafeln beschichtet und die Kunststoffteile anschließend ausgestanzt, so daß allgemein eine Fläche zwischen 10 und 100.000 cm$^2$ beschichtet wird.

Diese Kunststoffteile können den unterschiedlichsten Lebensmitteln zugefügt werden, beispielsweise Kartoffelchips, Erdnußflipsen, Salzgebäck bzw. anderen salzigen Snacks u.ä., Müslis bzw. Cerealien, Schokoladenerzeugnissen, Plätzchen usw.

Die erfindungsgemäß eingesetzten Kunststoffteile können aus den verschiedensten Kunststoffen bestehen, z.B. Polyethylen (LDPE, MDPE, HDPE, LLDPE, VLDPE), Polypropylene, Copolymere des Polyethylens und Polypropylens und andere Polyolefine, Polystyrol, Polyester, wie z.B. Terephthalate, Polyurethane, Kautschuk, Polybutadien, Polyisopren und Polyamide. Bevorzugt werden Kunststoffteile aus Polyethylen, Polypropylen sowie Polystyrol und besonders bevorzugt Kunststoffteile aus Polystyrol eingesetzt.

Gemeinsam ist diesen in Rede stehenden Kunststoffteilen jedoch stets, daß sie aufgrund der gemeinsamen Verpackung in Kontakt mit den jeweiligen Lebensmitteln stehen und daß sie an zumindest einer ihrer Oberflächen zumindest teilweise mit einer Druckfarbe bedruckt sind.

Für die Bedruckung der in dem erfindungsgemäßen Verfahren eingesetzten Kunststoffteile können alle üblicherweise eingesetzten Druckfarben verwendet werden. Hierbei ist es insbesondere vorteilhaft, daß die verwendeten Druckfarben aufgrund ihrer Überlackierung nicht den lebensmittelrechtlichen Anforderungen genügen müssen, sodaß alle üblicherweise eingesetzten Druckfarben verwendet werden können.

Die Druckfarben werden dabei üblicherweise vollflächig auf zumindest eine der Oberflächen der Kunststoffteile aufgebracht. Je nach Motiv und/oder Form der zu bedruckenden Kunststoffteile (insbesondere beispielsweise bei der Bedruckung von Figuren/Spielzeug) ist es aber selbstverständlich auch möglich, daß nur Teile der Oberfläche des Kunststoffteils bedruckt sind. In diesem Fall kann der erfindungsgemäß eingesetzte wäßrige Lack auch auf die nicht mit der Druckfarbe beschichteten Bereiche des Kunststoffteils appliziert werden. Ferner ist es auch möglich, die der bedruckten Oberfläche gegenüberliegende/benachbarte und nicht bedruckte Oberfläche mit dem erfindungsgemäß eingesetzten Lack zu beschichten.

Werden die in Rede stehenden Kunststoffteile direkt (d.h. ohne vorherige Applikation einer Druckfarbe) mit dem erfindungsgemäß eingesetzten Lack beschichtet, wird die Oberfläche vor dem Aufbringen des wäßrigen Lackes auf die Kunststoffteile im allgemeinen vorbehandelt, um sicherzustellen, daß der Überzug fest auf dem Kunststoffteil haftet. Dadurch soll vermieden werden, daß der Überzug von dem Kunststoffteil abblättert oder abgezogen wird.

Diese Behandlung wird gemäß bekannter Arbeitsweisen durchgeführt, z.B. durch Chlorierung der Kunststoffteile, Behandlung mit oxidierenden Mitteln, wie Chromsäure oder heißer Luft, durch Dampfbehandlung oder Flammenbehandlung. Besonders bevorzugt wird als Vorbehandlung eine Hochspannungscoronaentladung verwendet.

Die Kunststoffteile können außerdem nach der Vorbehandlung vorlackiert werden, um die Haftung des Überzugs auf dem Kunststoffteil zu gewährleisten. Geeignete Vorbeschichtungsmittel bzw. Primer sind in der Literatur bekannt und umfassen z.B. Alkyltitanate und Polyethylenimine. Die Polyethylenimine können dabei sowohl aus organischer als auch aus wäßriger Lösung auf die ggf. vorbehandelten Kunststoffteile aufgetragen werden. Dabei kann die Konzentration des Polyethylenimins in der wäßrigen oder in der organischen Lösung beispielsweise 0,5 Gew.-% betragen. Geeignete Polyethylenimin-Primer sind beispielsweise beschrieben in DE-A- 24 40 112 und US-A-3,753,769.

Nachfolgend wird die Erfindung anhand eines Ausführungsbeispiels näher erläutert. Dabei bedeuten Teile Gewichtsteile, sofern nichts anderes angegeben wird.

Beispiel

In einem Reaktionsgefäß werden 31,1 Teile entmineralisiertes Wasser und 0,05 Teile eines anionischen Emulgators vom Estertyp eingewogen. Die Vorlage wird auf etwa 80 - 82 °C erwärmt. In den Monomerentank wird eine Mischung aus 16,2 Teilen Methylacrylat, 11,9 Teilen Methylmethacrylat, 1,4 Teilen Acrylsäure, 0,5 Teilen Isooctylthioglycolat und 0,4 Teilen Wasser eingewogen und vorgemischt. Dann werden 0,09 Teile Ammoniumperoxodisulfat und 0,3 Teile entmineralisiertes Wasser zugefügt. 10 % des Inhalts des Monomerentanks werden während 30 min bei etwa 80 °C gleichmäßig in den Reaktor dosiert. Anschließend werden 0,8 Teile des anionischen Emulgators zugefügt. Das Reaktionsgemisch wird etwa 10 min bei der Reaktionstemperatur gehalten, anschließend wird der Restinhalt des Monomerentanks während 3 Stunden bei etwa 80 °C gleichmäßig zudosiert. Anschließend wird etwa 2 Stunden bei etwa 80 °C nachpolymerisiert. Anschließend wird bei einer Temperatur von etwa 60 °C unter Rühren eine Mischung aus 0,6 Teilen Ammoniak (25 %ig) und 6,0 Teilen Wasser zugeben. Anschließend wird mit einer Mischung aus Ammoniak (25%ig) und Wasser (Mischungsverhältnis 0,6 : 6,0) auf einen Festkörpergehalt von 30 % und eine Viskosität bei 25 °C von 30 mPa.s eingestellt. Der Gehalt an Ammoniak (100%ig) in dem fertigen Lack (Festkörper 30 %) beträgt 0,15 Teile. Das erhaltene Acrylatcopolymerisat weist ein zahlenmittleres Molekulargewicht von 10.000, eine Säurezahl von 37 mg KOH/g und eine Glasübergangstemperatur von 42 °C (gemessen mit DSC = Differential Scanning Calorimetry) auf.

Der so erhaltene Lack wird mit einer Drahtrakel auf handelsübliche, bedruckte scheibenförmige Polystyrol-Kunststoffteile (Flippos) appliziert. Das Auftragsgewicht (trocken) beträgt 8 bis 10 g/m$^2$. Getrocknet wurde mit erwärmter Luft von 35 bis 65°C während einer Zeit von 5 bis 20 min.

Die so beschichteten Kunststoffteile weisen eine gute Haftung der Lackschicht auf der Druckfarbe, gute optische Eigenschaften sowie gute Kratzfestigkeit auf und sind für den Kontakt mit Lebensmitteln geeignet.

**Patentansprüche**

1. Verfahren zur Beschichtung von Kunststoffteilen, die

    1. auf mindestens einer Oberfläche zumindest teilweise mit einer oder mehreren Druckfarben beschichtet sind und die

    2. in Kontakt mit Lebensmitteln stehend verpackt werden,
    dadurch gekennzeichnet, daß auf die Druckfarbe ein Lack auf Basis einer wäßrigen Acrylatcopolymerisat-Dispersion bzw. -Lösung appliziert und anschließend getrocknet wird, wobei die wäßrige Acrylat-Dispersion bzw. -Lösung herstellbar ist durch eine Emulsionspolymerisation von

    a) 1 bis 15 Gew.-%, bevorzugt 2 bis 8 Gew,-%, $\alpha,\beta$-ethylenisch ungesättigten Carbonsäuren,

    b) 40 bis 69 Gew.-%, bevorzugt 48 bis 60 Gew.-%, Alkylestern der Acrylsäure mit 1 - 12 Kohlenstoffatomen im Alkylrest,

c) 0 bis 55 Gew.-%, bevorzugt 35 bis 45 Gew.-%, Alkylestern der Methacrylsäure mit 1 - 12 Kohlenstoffatomen im Alkylrest und/oder Vinylaromaten und

d) ggf. bis zu 25 Gew.-%, bevorzugt bis zu 10 Gew.-%, weiterer Monomerer, wobei die Summe von a), b), c) und d) jeweils 100 Gew.-% beträgt und die Glasübergangstemperatur ($T_g$) des Acrylatcopolymerisats mindestens 25 °C beträgt.

2. Verfahren nach Anspruch 1, dadurch gekennzeichnet, daß die Glasübergangstemperatur ($T_g$) des Acrylatcopolymerisats im Bereich von 25 °C bis 50 °C, bevorzugt von 30 °C bis 50 °C, liegt.

3. Verfahren nach Anspruch 1 oder 2, dadurch gekennzeichnet, daß die wäßrige Acrylat-Dispersion bzw. -Lösung herstellbar ist durch eine zweistufige Emulsionspolymerisation, wobei in der ersten Stufe der Emulsionspolymerisation 5 bis 20 Gew.-% der Monomerenmischung aus a), b), c) und ggf. d) bei einer Temperatur von 70 °C - 90 °C unter Verwendung von Emulgatoren, Polymerisationsinitiatoren und Kettenübertragungsmitteln polymerisiert werden, bevorzugt nach erneuter Emulgatorenzugabe in der zweiten Stufe der Emulsionspolymerisation die restlichen 80 bis 95 Gew.-% der Monomerenmischung in Gegenwart des in der ersten Stufe der Emulsionspolymerisation erhaltenen Polymerisats bei einer Temperatur von 70 °C - 90 °C polymerisiert werden, das erhaltene Reaktionsgemisch durch Zugabe von Basen zumindest teilweise neutralisiert wird und ggf. Pigmente und ggf. übliche Hilfsstoffe und Additive zugefügt werden.

4. Verfahren nach einem der Ansprüche 1 bis 3, dadurch gekennzeichnet, daß die Kunststoffteile im wesentlichen scheibenförmig oder elipsenförmig oder ringförmig oder dreieckig oder rechteckig oder quadratisch sind.

5. Verfahren nach einem der Ansprüche 1 bis 4, dadurch gekennzeichnet, daß der Kunststoff Polyethylen, Polypropylen oder Polystyrol, insbesondere Polystyrol, ist.

6. Verfahren nach einem der Ansprüche 1 bis 5, dadurch gekennzeichnet, daß die wäßrige AcrylatcopolymerisatDispersion bzw. -Lösung hergestellt worden ist durch Emulsionspolymerisation von Acrylsäure, Methylacrylat und Methylmethacrylat.

7. Verfahren nach einem der Ansprüche 1 bis 6, dadurch gekennzeichnet, daß der Festkörpergehalt der wäßrigen Acrylatcopolymerisat-Dispersion bzw. -Lösung im Bereich von 20 - 60 %, bevorzugt 20 bis 40 %, liegt.

8. Kunststoffteil, erhältlich nach einem der Ansprüche 1 bis 7.

Europäisches
Patentamt

**EUROPÄISCHER RECHERCHENBERICHT**

Nummer der Anmeldung

EP 97 11 2717

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.6) |
|---|---|---|---|
| Y,D | WO 95 09876 A (BASF LACKE & FARBEN AG) 13.April 1995 * das ganze Dokument * --- | 1-8 | B41M7/00 |
| Y | DE 32 25 875 A (BASF AG) 12.Januar 1984 * das ganze Dokument * --- | 1-8 | |
| A | EP 0 560 508 A (ZENECA RESINS BV) 15.September 1993 * Beispiele 1,4 * * das ganze Dokument * --- | 1-8 | |
| A,P | EP 0 732 344 A (HENKEL CORPORATION) 18.September 1996 * das ganze Dokument * --- | 1-8 | |
| A | EP 0 117 350 A (MOBIL OIL CORP) 5.September 1984 * das ganze Dokument * --- | 1-8 | |
| A | US 5 268 417 A (FILGES ULRICH ET AL) 7.Dezember 1993 * das ganze Dokument * ----- | 1-8 | RECHERCHIERTE SACHGEBIETE (Int.Cl.6) B41M |

Der vorliegende Recherchenbericht wurde für alle Patentansprüche erstellt

| Recherchenort | Abschlußdatum der Recherche | Prüfer |
|---|---|---|
| DEN HAAG | 12.November 1997 | Martins Lopes, L |